# EUROPÄISCHE PATENTANMELDUNG

(11) **EP 4 230 033 A1**
(43) Veröffentlichungstag der Anmeldung: **23.08.2023**
(21) Anmeldenummer: 23157423.7
(22) Anmeldetag: 17.02.2023
(51) Int. Cl.: A01K 13/00

(54) **GESCHÜTZTE RINDERBÜRSTE**

(30) Priorität: 18.02.2022 DE 202022100932 U
(71) Anmelder: Bertling, Christian, 48249 Dülmen (DE)
(72) Erfinder: Bertling, Christian, 48249 Dülmen (DE)
(74) Vertreter: Habbel, Ludwig

(57) **Zusammenfassung**

Bei einer Rinderbürste (1), die dazu bestimmt ist, für ein Rind zugänglich angeordnet zu werden, mit einem Borstenhalter (12), und mit einer Vielzahl von Borsten (7), die an dem Borstenhalter (12) gehalten sind und dazu bestimmt sind, dass sich das Rind daran reiben kann, schlägt die Erfindung vor, dass die Rinderbürste (1) ein Schutzgehäuse (3) mit einer Öffnung (15) aufweist, und dass der Borstenhalter (12) in der Art angeordnet ist, dass sich die Borsten (7) durch die Öffnung (15) des Schutzgehäuses (3) aus dem Schutzgehäuse (3) heraus erstrecken.

## Beschreibung

Die Erfindung betrifft eine Rinderbürste nach dem Oberbegriff des Anspruchs 1. Der Begriff der Rinderbürste betrifft eine aus der Praxis bekannte Bezeichnung der Bürste, da derartige Bürsten in Rinderställen Anwendung finden. Sie unterscheiden sich von Kleintierbürsten, die beispielsweise für Hunde oder Katzen zur Fellpflege dienen, hinsichtlich ihrer Größe sowie der Ausgestaltung der Borsten, sind aber auch bei anderen Tierarten als Rindern verwendbar, beispielsweise in zoologischen Gärten. Aufgrund des typischen Anwendungsfalls bei Rindern wird nachfolgend die Bezeichnung Rinderbürste durchgängig verwendet, ohne auf die Anwendung bei Rindern eingeschränkt zu sein.

Aus der Praxis ist es bekannt, zur Verbesserung des Tierwohls Rindern eine Bürste zugänglich zu machen, so dass sich die Tiere nach Bedarf daran reiben bzw. kratzen können. Insbesondere Bullen behandeln die ihnen zugänglichen Rinderbürsten wenig pfleglich, so dass die Bürsten innerhalb kurzer Zeit zerstört werden und ein erhöhter Verschleiß von vornherein in Kauf genommen wird, wenn zugunsten des Tierwohls Rinderbürsten insbesondere in Bullenställen installiert werden. Insbesondere aufgrund des hohen Drucks, mit dem sich die Bullen gegen die Borsten pressen, brechen die Borsten regelmäßig ab, da sie mit einem zu hohen Druck gegen den Borstenhalter gepresst und auf diese Weise geknickt werden.

Der Erfindung liegt die Aufgabe zugrunde, eine gattungsgemäße Rinderbürste dahingehend zu verbessern, dass sie auch bei starker mechanischer Beanspruchung wie einer Verwendung im Bereich der Bullenhaltung möglichst wirtschaftlich ausgestaltet werden kann und eine lange Nutzungsdauer aufweist.

Diese Aufgabe wird durch eine Rinderbürste nach Anspruch 1 gelöst. Vorteilhafte Ausgestaltungen sind in den Unteransprüchen beschrieben.

Die Erfindung schlägt mit anderen Worten vor, ein Schutzgehäuse vorzusehen, welches eine Öffnung aufweist, aus denen die Borsten herausragen, so dass in dieser Stellung die Borsten den Tieren zugänglich sind. Übt das Tier einen Druck auf die Borsten auf, der ein bestimmtes Maß überschreitet, so dass sich die Borsten um ein bestimmtes Maß verformen, bis das Tier in Kontakt mit dem Schutzgehäuse kommt, so muss der von dem Tier ausgeübte Druck nicht weiter von den Borsten oder dem Borstenhalter aufgenommen werden, sondern wird vielmehr von dem Schutzgehäuse aufgenommen. Der Borstenhalter ist so tief in dem Schutzgehäuse angeordnet und die maximal mögliche Verformung der Borsten dementsprechend in der Art begrenzt, dass eine vorschnelle Abnutzung sowie eine Beschädigung der Borsten vermieden wird.

In einer Ausgestaltung kann der Borstenhalter beweglich sein, so dass er mitsamt den daran befindlichen Borsten dem Druck eines Tiers nachgeben kann. Wenn die Borsten aus der Öffnung herausragen, stellt dies die sogenannte Arbeitsstellung des Borstenhalters dar, denn in dieser Stellung sind die Borsten den Tieren zugänglich. Übt das Tier einen Druck auf die Borsten auf, taucht der Borstenhalter mitsamt den Borsten in das Schutzgehäuse so weit ein, dass dadurch der von dem Tier ausgeübte Druck nicht weiter vollumfänglich von den Borsten oder dem Borstenhalter aufgenommen werden muss, sondern vielmehr ganz oder teilweise von dem Schutzgehäuse. Der Borstenhalter taucht so tief in das Schutzgehäuse ein, bis er eine sogenannte Schutzstellung einnimmt, in welcher die Verformung der Borsten begrenzt und eine Beschädigung der Borsten vermieden wird. Aufgrund der beweglichen Ausgestaltung des Borstenhalters können die Borsten in der Arbeitsstellung weiter aus dem Schutzgehäuse herausragen als bei einer starren Anordnung des Borstenhalters, was für angestrebte Bürstwirkung vorteilhaft ist.

Die Borsten können in der Schutzstellung beispielsweise vollständig in das Gehäuse eingetaucht sein, sie können jedoch auch noch in einem verringerten Ausmaß aus dem Gehäuse herausragen, wobei jedoch sichergestellt ist, dass ein weiter auf die Borsten ausgeübter Druck beispielsweise dazu führt, dass sich die Borsten in einem solchen geringen Ausmaß verbiegen, dass sie nicht geknickt werden und jedenfalls nicht brechen.

Die Beweglichkeit des Borstenhalters kann elektromotorisch erfolgen. Beispielsweise kann mittels Sensoren der Druck erfasst werden, der auf die Borsten und / oder auf den Borstenhalter einwirkt, und anhand der Sensorsignale sowie mittels einer elektronischen Steuerung kann der Borstenhalter automatisch und elektromotorisch aus seiner Arbeitsstellung in die Schutzstellung bewegt werden. Die Druckerfassung mittels der Sensoren kann in kurzen zeitlichen Intervallen, ggf. quasi-kontinuierlich, wiederholt werden, so dass bei einer Verringerung des sensorisch erfassten Drucks die Steuerung den Elektromotor in der Art ansteuert, dass der Borstenhalter in Richtung seiner Arbeitsstellung bewegt wird, so dass er ggf. vollständig bis in seine Arbeitsstellung zurückgeführt wird.

In einer bevorzugten, besonders wirtschaftlichen Ausgestaltung der Rinderbürste ist jedoch vorgesehen, dass der Borstenhalter gegen die Wirkung einer Rückstellkraft federbeweglich aus seiner Arbeitsstellung in seine Schutzstellung bewegt werden kann. Aufgrund der Rückstellkraft erfolgt auch ohne einen eigens vorgesehenen Antriebsmotor, eine elektronische Steuerung oder dergleichen automatisch eine Bewegung des Borstenhalters aus seiner Schutzstellung zurück in seine Arbeitsstellung, und umgekehrt kann der Borstenhalter gegen die Rückstellkraft automatisch aus seiner Arbeitsstellung in die Schutzstellung geführt werden, sobald von außen die entsprechenden Druckkräfte auf die Borsten und somit auf den Borstenhalter und die Feder einwirken. Bei dieser Ausgestaltung sind keine Anschlussleitungen der Rinderbürste zur Energieversorgung, zur Signalübertragung oder dergleichen erforderlich, so dass der Montageaufwand zur Installation der Rinderbürste gering ist. Die Leitungen müssten zudem aus Sicherheitsgründen besonders geschützt verlegt werden, so dass ohne die Notwendigkeit von Leitungen der Montageort der Rinderbürste in hohem Maße frei wählbar ist.

Der Borstenhalter kann frei pendelnd aufgehängt sein und sich in seiner Arbeitsstellung beispielsweise gegen eine Wendelfeder abstützen, so dass er gegen die Wirkung dieser Wendelfeder in die Schutzstellung gedrückt werden kann, wobei die Wendelfeder komprimiert wird. Oder der Borstenhalter kann, bei ebenfalls frei pendelnder Aufhängung, von einem elastischen Element wie z. B. einem sogenannten Expanderseil in seiner Arbeitsstellung gehalten sein und gegen die Federwirkung, unter Dehnung des Expanderseils, in die Schutzstellung gedrückt werden.

In einer anderen Ausgestaltung kann der Borstenhalter auf einem Träger montiert sein, der seinerseits beweglich gelagert ist oder verformbar ausgestaltet ist. Je nach Ausgestaltung der verwendeten Feder kann der Träger daran angepasst ebenfalls unterschiedlich ausgestaltet sein. In einer Ausgestaltung wird der Träger durch die Feder selbst gebildet, indem er als Blattfeder ausgestaltet ist. Dies ermöglicht eine besonders robuste und langlebige Konstruktion der Rinderbürste und stellt darüber hinaus sicher, dass durch glattflächige und geschlossene Elemente eine einfache Reinigung der Rinderbürste ebenso gewährleistet ist wie Verletzungsgefahren weitgehend vermieden werden.

In einer Ausgestaltung kann das Schutzgehäuse einen Anschlag aufweisen, dem der Borstenhalter oder ein Träger, an dem der Borstenhalter montiert ist, in der Arbeitsstellung anliegt. Auf diese Weise ist sichergestellt, dass die Borsten nur in einem vorbestimmten Maß durch die Öffnung aus dem Schutzgehäuse herausragen, so dass sie zwar hinsichtlich ihrer Bürstwirkung genutzt werden können, gleichzeitig aber auch gegen Beschädigungen möglichst gut geschützt sind.

Auch hinsichtlich der anderen, nämlich der Schutzstellung, kann das Schutzgehäuse einen Anschlag für den Borstenhalter bzw. dessen Träger aufweisen. Dies kann einerseits dazu dienen, je nach Montageort der Rinderbürste Elemente der Stalleinrichtung zu schützen, gegen die ansonsten der Borstenhalter bzw. sein Träger anschlagen könnten. Andererseits kann dieser Anschlag auch dazu dienen, einen definierten Überstand der Borsten aus dem Schutzgehäuse zu gewährleisten, selbst wenn sich der Borstenhalter in seiner Schutzstellung befindet, so dass auch dann die Rinderbürste noch hinsichtlich ihrer Bürstwirkung genutzt werden kann.

Bei einem oder beiden der oben genannten Anschläge kann ein Dämpfungselement vorgesehen sein, beispielsweise ein Block aus einem Elastomermaterial, so dass auch beim kraftvollen und spielerischen Betätigen der Rinderbürste eine unerwünschte Lärmentwicklung ausgeschlossen ist, die ansonsten beispielsweise durch das Aneinanderschlagen metallischer Elemente zu Stress bei den Tieren führen und die Lebensdauer der Rinderbürste verringern könnte.

Das Schutzgehäuse kann als regelrechtes Gehäuse mit Wandflächen ausgestaltet sein. Abweichend davon kann jedoch in einer als vorteilhaft erachteten Ausgestaltung des Schutzgehäuse als Korb oder als Gitter aus einzelnen Streben ausgestaltet sein oder sogar nur in Form von zwei Bügeln, die beispielsweise jeweils im Wesentlichen U-förmig verlaufen und zwischen sich die Öffnung bilden, durch welche die Borsten aus dem Schutzgehäuse heraus ragen. Die Schutzwirkung des Schutzgehäuses resultiert daraus, dass die in das Schutzgehäuse eingetauchten Elemente der Rinderbürste für die Rinder nicht zugänglich sind und dementsprechend vor Beschädigungen, vor zu hohem Druck und dergleichen geschützt sind. Die offene Bauweise in Form einzelner Streben, Bügel oder dergleichen ermöglicht eine optimale Reinigung der Rinderbürste und vermeidet hygienisch nachteilige Keimnester. Zudem bietet sie die Möglichkeit einer wirtschaftlichen Herstellung der Rinderbürste durch Verwendung wirtschaftlich erhältlicher Halbzeuge in Form von Rohren, Bügeln oder dergleichen.

Das Schutzgehäuse kann in einer Ausgestaltung Montageplatten aufweisen, die mit Bohrungen versehen sind, so dass das Schutzgehäuse mittels dieser Montageplatten einer Tragkonstruktion angelegt werden kann, beispielsweise einer Stallwand, und die Bohrungen dabei jeweils die Durchführung einer Befestigungsschraube gestatten, so dass das Schutzgehäuse an der Stallwand festgedübelt werden kann. Aber auch bei der Montage der Rinderbürste an Zäunen, Gattern, Relings und dergleichen können die Montageplatten mit ihren Bohrungen genutzt werden, indem beispielsweise U-förmig verlaufende Schraubbügel verwendet werden, die sich jeweils mit ihren beiden Enden durch zwei der Bohrungen erstrecken und um einen Abschnitt des betreffenden Zauns, Gatters oder der Reling verlaufen.

Ausführungsbeispiele der Erfindung werden anhand der rein schematischen Darstellungen nachfolgend näher erläutert. Dabei zeigt
- Fig. 1: eine perspektivische Ansicht auf ein erstes Ausführungsbeispiel einer Rinderbürste, die an einer Abtrennung in einem Stall montiert ist,
- Fig. 2: aus einer anderen Blickrichtung eine perspektivische Ansicht auf ein zweites Ausführungsbeispiel einer Rinderbürste, wobei sich der Borstenhalter in seiner Arbeitsstellung befindet
- Fig. 3: die Rinderbürste von Fig. 2, während der Bewegung aus der Arbeitsstellung in die Schutzstellung,
- Fig. 4: aus einer anderen Blickrichtung die Rinderbürste von Fig. 2 in ihrer Arbeitsstellung,
- Fig. 5: einen Blick auf den unteren hinteren Bereich der Rinderbürste von Fig. 2, und
- Fig. 6: einen Blick auf den unteren vorderen Bereich der Rinderbürste von Fig. 2.

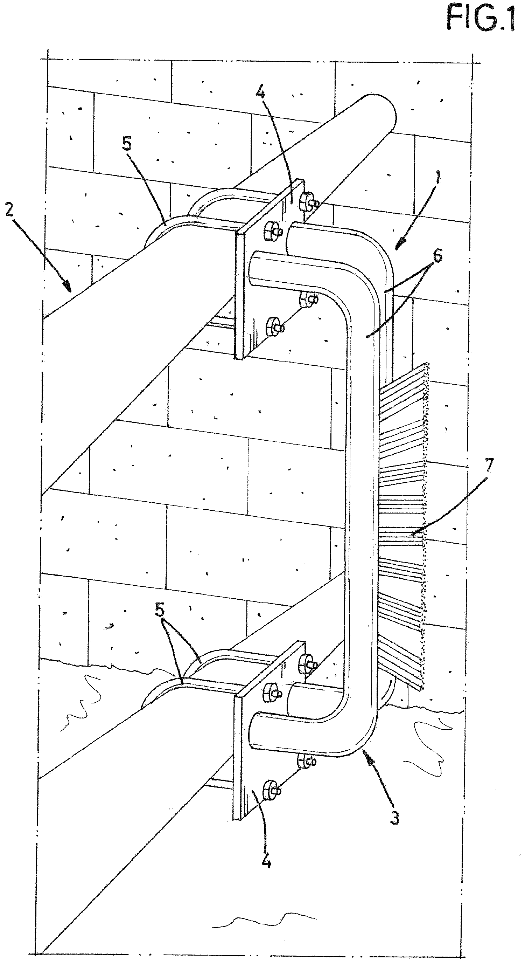

In Fig. 1 ist ein erstes Ausführungsbeispiel einer Rinderbürste 1 ersichtlich, die an einer aus mehreren Rohren gebildeten Stallabtrennung 2 montiert ist. Die Rinderbürste 1 weist ein Schutzgehäuse 3 auf, welches mithilfe von Montageplatten 4 und U-förmigen Schraubbügeln 5 an der Stallabtrennung 2 montiert ist. Das Schutzgehäuse 3 weist zwei vertikal und parallel zueinander verlaufende Bügel 6 auf, zwischen denen Borsten 7 der Rinderbürste 1 aus dem Schutzgehäuse 3 herausragen. Die Borsten 7 und ein die Borsten 7 haltender, in Fig. 1 von einem Bügel 6 verdeckter Borstenhalter befinden sich in ihrer Arbeitsstellung, so dass die Borsten 7 aus dem Schutzgehäuse 3 herausragen.

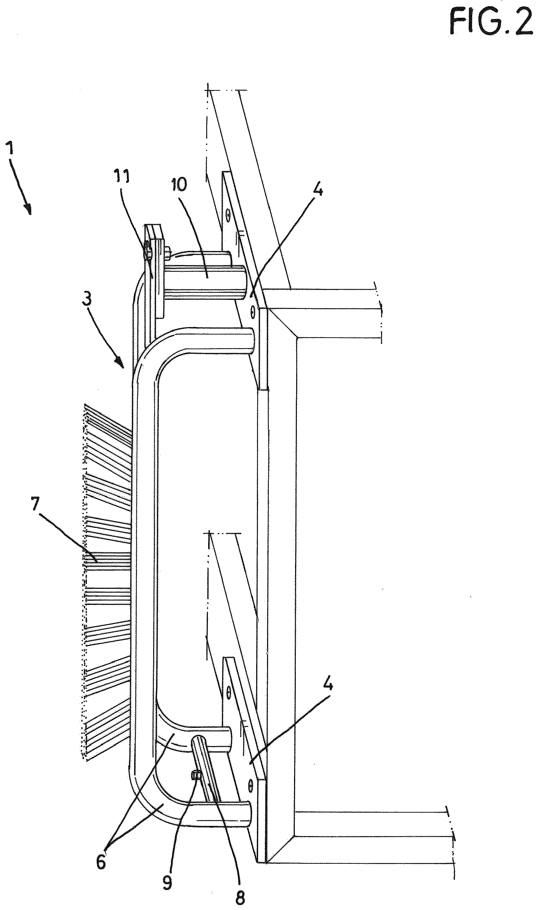

Fig. 2 zeigt als zweites Ausführungsbeispiel eine ähnlich ausgestaltet Rinderbürste 1, und zwar ebenfalls in der Arbeitsstellung. Im unteren Bereich der Rinderbürste 1 verläuft eine hintere Traverse 8 zwischen den beiden Bügeln 6 und trägt einen Elastomerpuffer als hinteren Anschlag 9. Weiterhin zeigt Fig. 2, dass zwischen den beiden Bügeln 6 ein Kragarm 10 von der oberen Montageplatte 4 nach vorn ragt. An dem Kragarm 10 ist eine Blattfeder 11 befestigt, die von dem Kragarm 10 zwischen den beiden Bügeln 6 nach unten hängt.

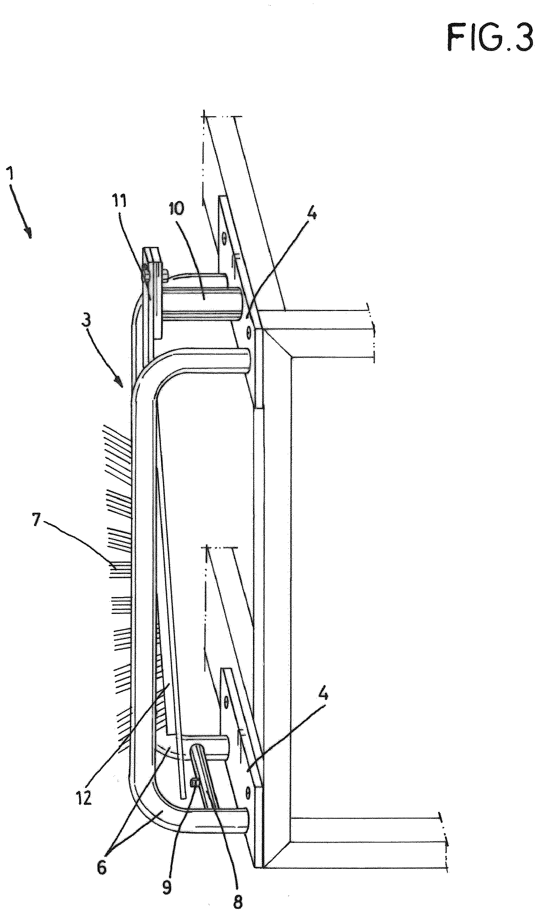

Fig. 3 zeigt die Rinderbürste 1 von Fig. 2, wobei von außen Druck auf die Borsten 7 ausgeübt wird, so dass die Blattfeder 11 verformt wird und in das Schutzgehäuse 3 eintaucht. Dabei ist erkennbar, dass die Blattfeder 11 als Träger für einen Borstenhalter 12 dient, an welchem die Borsten 7 gehalten sind. Der Borstenhalter 12 verläuft länglich in aufrechter Richtung, und aus Fig. 3 ist erkennbar, dass die unteren Borsten 7 bereits weitgehend in das Schutzgehäuse 3 eintauchen, während die oberen Borsten 7 noch bürstwirksam aus dem Schutzgehäuse 3 herausragen und zum Bürsten genutzt werden können.

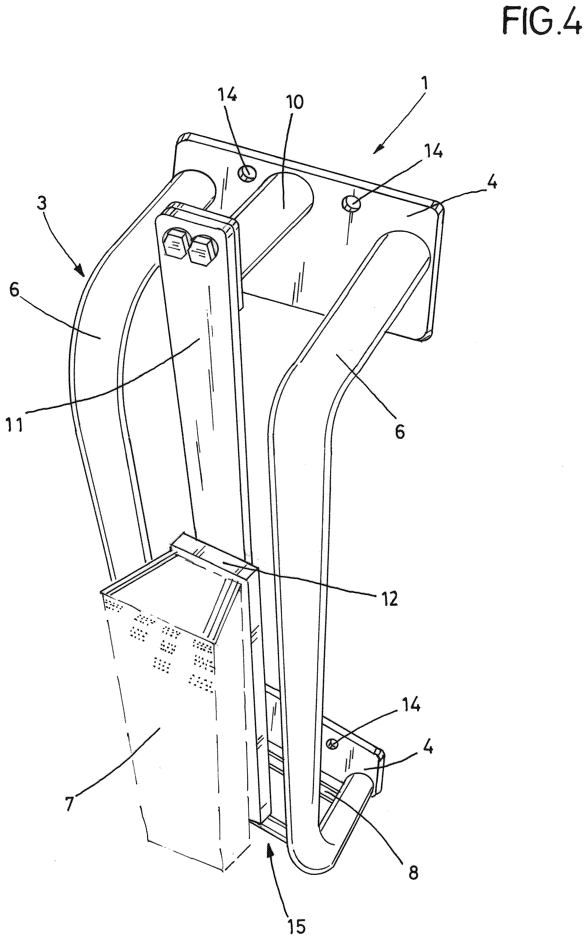

Aus Fig. 4 sind Bohrungen 14 in den Montageplatten 4 ersichtlich, und es ist erkennbar, dass die beiden Bügel 6 des Schutzgehäuses 3 zwischen sich eine Öffnung 15 schaffen, aus welcher die Borsten 7 nach vorne aus dem Schutzgehäuse 3 herausragen und in welche der Borstenhalter 12 mitsamt den Borsten 7 eintauchen kann. Dadurch, dass die Blattfeder 11 mithilfe von zwei Schrauben an dem Kragarm 10 befestigt ist, ist sie nicht um einen einzigen Befestigungspunkt drehbar, sondern nur unter elastischer Verformung nach hinten beweglich, wenn nämlich der Borstenhalter 12 mitsamt den Borsten 7 aus seiner in Fig. 4 dargestellten Arbeitsstellung in die Schutzstellung bewegt wird.

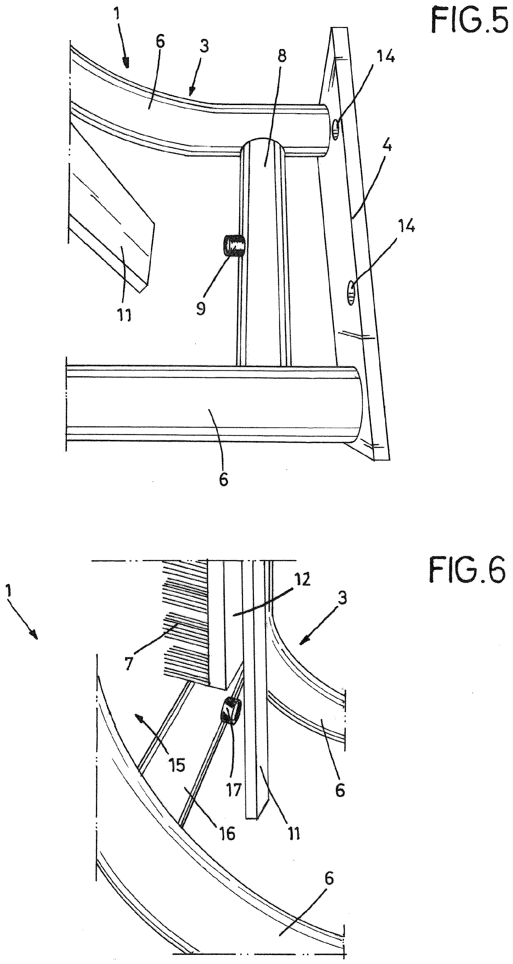

Fig. 5 zeigt einen Blick auf den unteren hinteren Bereich der Rinderbürste 1. Auch bei dieser Darstellung befindet sich der Borstenhalter 12 in seiner Arbeitsstellung. Wenn die Blattfeder 11 verformt wird, so dass der Borstenhalter 12 in das Schutzgehäuse 3 eintaucht, wird diese Bewegung der Blattfeder 11 und es Borstenhalter 12 dadurch begrenzt, dass die Blattfeder 11 dem hinteren Anschlag 9 anliegt, was die Schutzstellung des Borstenhalter 12 definiert.

Fig. 6 zeigt einen Blick auf den unteren vorderen Bereich der Rinderbürste 1 während der Bewegung, welche der Borstenhalter 12 aus seiner Arbeitsstellung in seine Schutzstellung vollführt. Eine vordere Traverse 16 verläuft zwischen den beiden Bügeln 6 etwas höher als die hintere Traverse 8, und die vordere Traverse 16 ist ebenfalls mit einem Elastomerpuffer versehen, der einen vorderen Anschlag 17 bildet. Die Blattfeder 11 erstreckt sich über den Borstenhalter 12 hinaus nach unten und liegt dem vorderen Anschlag 17 an, wenn keine anderweitigen Kräfte auf die Rinderbürste 1 einwirken. Bei einem von außen auf die Borsten 7 einwirkenden Druck wird die Blattfeder 11 verformt und bewegt sich, wie in Fig. 6 ersichtlich, von dem vorderen Anschlag 17 weg nach hinten, tiefer in das Schutzgehäuse 3 hinein, bis sie schließlich am Ende der Bewegung gegen den hinteren Anschlag 9 geraten wird und in dieser Stellung der Borstenhalter 12 dann seine Schutzstellung einnimmt.

### Bezugszeichen:

- 1: Rinderbürste
- 2: Stallabtrennung
- 3: Schutzgehäuse
- 4: Montageplatte
- 5: Schraubbügel
- 6: Bügel
- 7: Borsten
- 8: Hintere Traverse
- 9: Hinterer Anschlag
- 10: Kragarm
- 11: Blattfeder
- 12: Borstenhalter
- 14: Bohrung
- 15: Öffnung
- 16: Vordere Traverse
- 17: Vorderer Anschlag

## Patentansprüche

1. Rinderbürste (1), die dazu bestimmt ist, für ein Rind zugänglich angeordnet zu werden,
mit einem Borstenhalter (12),
und mit einer Vielzahl von Borsten (7), die an dem Borstenhalter (12) gehalten sind und dazu bestimmt sind, dass sich das Rind daran reiben kann,
**dadurch gekennzeichnet,**
**dass** die Rinderbürste (1) ein Schutzgehäuse (3) mit einer Öffnung (15) aufweist,
und **dass** der Borstenhalter (12) in der Art angeordnet ist, dass sich die Borsten (7) durch die Öffnung (15) des Schutzgehäuses (3) aus dem Schutzgehäuse (3) heraus erstrecken.

2. Rinderbürste nach Anspruch 1,
**dadurch gekennzeichnet,**
**dass** der Borstenhalter (12) zwischen einer Arbeitsstellung und einer Schutzstellung beweglich gelagert ist,
und sich der Borstenhalter (12) grundsätzlich in seiner Arbeitsstellung befindet,
und bei Überschreitung eines bestimmten auf die Borsten (7) einwirkenden Drucks aus seiner Arbeitsstellung in seine Schutzstellung bewegbar ist.

3. Rinderbürste nach Anspruch 2,
**dadurch gekennzeichnet,**
**dass** der Borstenhalter (12) gegen die Wirkung einer Rückstellkraft federbeweglich aus seiner Arbeitsstellung in seine Schutzstellung bewegbar ist.

4. Rinderbürste nach Anspruch 2 oder 3,
**dadurch gekennzeichnet,**
**dass** der Borstenhalter (12) an einem als Blattfeder (11) ausgestalteten Träger montiert ist.

5. Rinderbürste nach einem der Ansprüche 2 bis 4,
**dadurch gekennzeichnet,**
**dass** das Schutzgehäuse (3) einen Anschlag (17) aufweist, dem der Borstenhalter (12) oder ein den Borstenhalter tragender Träger anliegt, wenn sich der Borstenhalter (12) in seiner Arbeitsstellung befindet.

6. Rinderbürste nach einem der Ansprüche 2 bis 5,
**dadurch gekennzeichnet,**
**dass** das Schutzgehäuse (3) einen Anschlag (9) aufweist, dem der Borstenhalter (12) oder ein den Borstenhalter tragender Träger anliegt, wenn sich der Borstenhalter (12) in seiner Schutzstellung befindet.

7. Rinderbürste nach Anspruch 5 oder 6,
**dadurch gekennzeichnet,**
**dass** der Anschlag (9, 17) ein Dämpfungselement aufweist, gegen welches der Borstenhalter (12) oder der Träger in seiner jeweiligen Bewegung anschlägt.

8. Rinderbürste nach einem der vorhergehenden Ansprüche, **dadurch gekennzeichnet,**
**dass** das Schutzgehäuse (3) als Korb oder Gitter aus einzelnen Streben gebildet ist.

9. Rinderbürste nach Anspruch 8,
**dadurch gekennzeichnet,**
**dass** das Schutzgehäuse (3) zwei Bügel (6) aufweist, die zwischen sich die Öffnung (15) des Schutzgehäuses (3) bilden.

10. Rinderbürste nach einem der vorhergehenden Ansprüche,
**dadurch gekennzeichnet,**
**dass** das Schutzgehäuse (3) Montageplatten (4) aufweist, die mit Bohrungen (14) versehen sind und dazu bestimmt sind, eine Befestigung der Rinderbürste (1) an einer Tragkonstruktion zu ermöglichen.
